# EUROPEAN PATENT SPECIFICATION

(11) **EP 3 971 145 B1**
(45) Date of publication and mention of the grant of the patent: **04.01.2023**
(21) Application number: 21196423.4
(22) Date of filing: 13.09.2021
(51) Int. Cl.: C03B 37/014

(54) **MANUFACTURING METHOD OF GLASS BASE MATERIAL FOR OPTICAL FIBER**
VERFAHREN ZUR HERSTELLUNG EINES GLASBASISMATERIALS FÜR EINE OPTISCHE FASER
PROCÉDÉ DE FABRICATION D'UN MATÉRIAU DE BASE EN VERRE POUR FIBRE OPTIQUE

(30) Priority: 16.09.2020 JP 2020155731
(43) Date of publication of application: 23.03.2022
(73) Proprietor: SHIN-ETSU CHEMICAL CO., LTD., Tokyo 100-0004 (JP)
(72) Inventor: KOJIMA, Hiroki, Kamisu-shi, 314-0102 (JP)
(74) Representative: Vossius & Partner Patentanwälte Rechtsanwälte mbB

(56) References cited:
- JP-A- 2002 104 830
- US-A1- 2016 304 387

## Description

### BACKGROUND

### Technical Field

The present invention relates to a transparent vitrification process of dehydrating and sintering porous glass base material, and in particular to a manufacturing method of glass base material for optical fibers having uniform properties in the longitudinal direction when doped with fluorine.

### Background Art

A manufacturing method of glass base material is known in which a porous glass base material is placed in a heating furnace and dehydrated, fluorine-doped, and sintered to obtain a transparent glass base material.

In JP 2004-307281, it is described that a porous glass base material is placed in a heating furnace and moved through a heating zone under a chlorine-containing gas atmosphere to dehydrate it, then moved through a heating zone under a fluorine gas atmosphere to perform fluorine addition treatment, and then subjected to a transparent vitrification process to obtain a transparent glass base material with uniform fluorine-doped in the radial direction.

In JP 2012-250887, it is described that a porous glass base material is placed in a heating furnace and moved through a heating zone under a chlorine-containing gas atmosphere to dehydrate the base material, and then moved through a heating zone under a helium gas and fluorine-containing gas atmosphere to dope fluorine into part of cladding and make it transparent glass.

In JP 2017-154935, it is described that in a state where a porous glass base material is kept still in a soaking furnace, the base material is heated under a chlorine-containing gas atmosphere to dehydrate the base material, heated under a fluorine-containing gas atmosphere to dope with fluorine, and then heated under a helium gas containing atmosphere to make it transparent glass.

In JP2002104830, it is described a method of manufacturing a glass preform reduced in the number of bubble with sufficient dehydration by controlling dehydrator concentration or traverse speed complying with the bulk density of the porous glass preform to be treated glass.

### SUMMARY OF THE INVENTION

### PROBLEMS TO BE SOLVED BY THE INVENTION

When fluorine is doped into the porous glass base material during sintering, the doping amount distribution fluctuates in the longitudinal direction of the glass base material. The optical properties of the optical fiber fabricated from the glass base material are likely to fluctuate in the longitudinal direction. In particular, fluctuations in the optical properties of optical fibers fabricated from near the upper and lower ends of the porous glass base material are likely to occur. In view of the above problems, it is an object of the present invention to provide a manufacturing method of glass base material for optical fiber that can obtain glass base material for optical fiber with reduced fluctuation in optical properties in the longitudinal direction.

### MEANS FOR SOLVING THE PROBLEMS

To solve the above problems, a manufacturing method of glass base material for optical fiber according to the present invention includes: a first heat treatment step in which the porous glass base material inserted in a vessel of a sintering furnace is heated by a heater installed around the periphery of the vessel while being raised or lowered in the longitudinal direction in a chlorine-based gas containing atmosphere in the vessel of the sintering furnace; a second heat treatment step in which the porous glass base material is heated by the heater to obtain a transparent glass body while being raised or lowered in the longitudinal direction in an inert gas containing atmosphere in the vessel after the first heat treatment step; and a preliminary fluorine doping step prior to the second heat treatment step in which one or both ends of the porous glass base material are heated by the heater in a fluorine-based gas containing atmosphere in the vessel.

In the present invention, the preliminary fluorine doping step may be performed prior to the first heat treatment step. Alternatively, the preliminary fluorine doping step may be performed after completing the first heat treatment step.

In the present invention, in the first heat treatment step, the inside of the vessel may have a mixed atmosphere of chlorine-based gas and fluorine-based gas. In the second heat treatment step, the inside of the vessel may have a mixed atmosphere of inert gas and fluorine-based gas.

In the present invention, the preliminary fluorine doping step may be performed with the porous glass base material in a fixed position or with slight movement. The preliminary fluorine doping step may be performed at a temperature between 1000°C and 1400°C.

In the present invention, the length of the heater may be one-fourth or less of the length of the porous glass base material.

In the present invention, the fluorine-based gas introduced into the vessel may be any of SiF₄, CF₄, SF₆, and C₂F₆. The chlorine-based gas introduced into the vessel may be SiCl₄ or Cl₂.

### EFFECTS OF INVENTION

By drawing the glass base material for the optical fiber obtained by the manufacturing method of glass base material for optical fiber according to the present invention, an optical fiber with suppressed longitudinal variation in optical properties can be obtained.

### BRIEF DESCRIPTION OF THE DRAWINGS

FIG. 1 shows the configuration of the heating apparatus used in the manufacturing method of the glass base material.
FIGS. 2A to 2E show the procedure of the manufacturing method using the heating apparatus shown in FIG. 1.
FIG. 3 shows the longitudinal distribution of cutoff wavelengths of optical fibers obtained by Example 1 and Comparative Example 1, respectively.
FIG. 4 shows the longitudinal distribution of cutoff wavelengths of optical fibers obtained by Example 2 and Comparative Example 2, respectively.

### DETAILED DESCRIPTION OF THE EMBODIMENTS

### [First embodiment]

In the manufacturing method of glass base material for optical fiber in accordance with an embodiment of the present invention, first, a porous glass base material is produced by various methods including vapor-phase axial deposition (VAD) method, outside vapor deposition (OVD) method, and multi-burner multilayer deposition (MMD) method. The porous glass base material produced by these methods is formed from an aggregate of only glass particles or glass particles deposited on the periphery of transparent glass rods. The porous glass base material formed in this way is then sintered to make a transparent glass base material for optical fiber.

In the VAD method, a burner is placed below the rotating starting glass rod, and raw material gas is thrown into the oxyhydrogen flame formed by a burner to produce glass particles by flame hydrolysis reaction, and the produced glass particles are deposited in the axial direction of the starting glass rod to produce porous glass base material. In the OVD and MMD methods, for example, a burner is placed around the periphery of a starting glass rod rotating in a reaction vessel, and raw material gas is thrown into an oxyhydrogen flame formed by the burner to produce glass particles by flame hydrolysis reaction, and the produced glass particles are deposited on the periphery of the starting glass rod to produce the porous glass base material.

In a typical base material for single-mode optical fiber, a region called "core" is formed in the center. The core is often doped with Ge, which increases the refractive index of quartz glass. A layer with a lower refractive index than the core, called "cladding," is formed around the core. It is also common to manufacture cladding in two stages, where a portion of the cladding and the core are manufactured first, and then the remaining cladding is added to the outside of the core, or in multiple stages, where the cladding is added multiple times. In the present invention, the term "glass base material" is a general term for a member including a portion of the cladding and the core, and the core and the entire cladding.

The produced porous glass base material is dehydrated and transparently vitrified by a heating apparatus including a furnace core tube made of a heat-resistant material such as carbon or quartz and a heater arranged around the outer periphery of the furnace core tube. Transparent vitrification is performed by moving the porous glass base material inserted into the furnace core tube of the heating apparatus up or down through the heating zone. It is also possible to provide a step of dehydration before the transparent vitrification. In this dehydration step, the inside of the furnace core tube is placed in a mixed gas atmosphere of chlorine-based gas and inert gas, and the porous glass base material is dehydrated by raising or lowering, or oscillating with respect to the heating area.

Fluorine doping is carried out by including fluorine-based gas in the atmosphere during the dehydration process or transparent vitrification process. Fluorine has the effect of decreasing the refractive index distribution of quartz glass. By performing fluorine doping, the glass base material has a complicated refractive index distribution, whereby the optical properties of the optical fiber obtained from the glass base material can be adjusted.

Since the properties of an optical fiber depend on the refractive index distribution of the glass base material from which the optical fiber is drawn, it is important to make the doping amount of the glass base material uniform in the longitudinal direction in order to obtain the desired optical properties over the entire length of the optical fiber. In order to make the doping amount in the longitudinal direction, it is effective to make the thermal history at each longitudinal position uniform. However, the upper and lower portions of the porous glass base material have a tapered shape that shrinks in diameter toward the ends. Since this tapered portion has a smaller heat receiving area than the straight body, it is particularly difficult to maintain a uniform thermal history while keeping the temperature in the heating zone constant.

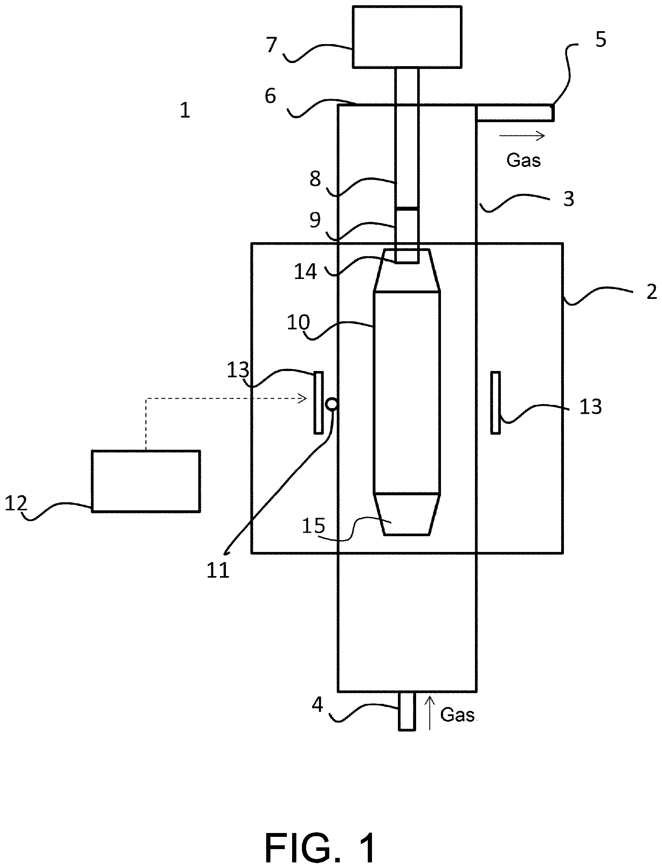

FIG. 1 shows the configuration of the heating apparatus used in the manufacturing method of the glass base material. The heating apparatus for the glass base material used in the manufacturing method according to the present embodiment is equipped with a sintering furnace 1. The sintering furnace has a furnace core tube 3, which is a vessel inside a furnace body 2. The furnace core tube is equipped with a gas inlet 4 at the bottom and an exhaust port 5 at the top. The top of the furnace core tube is equipped with a lid 6 opened and closed when the porous glass base material is inserted and removed. An elevating device 7 is installed above the furnace core tube, and the elevating device supports a suspension rod 8 penetrating the lid so as to be able to elevate and rotate. A dummy rod 9 is supported by this suspension rod 8. The porous glass base material 10 is attached to one end of the dummy rod 9. When the porous glass base material is heated to perform transparent vitrification, the outer peripheral atmosphere of the porous glass base material is a helium gas atmosphere. However, there is no problem if gases other than helium are mixed in as long as they are in small amounts.

Before performing transparent vitrification of the porous glass base material in the sintering furnace, the outer peripheral atmosphere of the porous glass base material may be made into a mixed atmosphere of chlorine-based gas and helium gas and heated. This effectively removes the OH groups in the porous glass base material (dehydration). The same effect can also be obtained by using inert gas other than helium (e.g., nitrogen, argon) instead of helium gas.

The manufacturing apparatus of glass base material is configured in this way. The porous glass base material is inserted into the furnace core tube of a sintering reactor. The inside of the furnace core tube is heated by a heater installed on the outer periphery of the furnace core tube to obtain a transparent glass body while raising or lowering the porous glass base material (vitrification).

Fluorine doping can be achieved by mixing fluorine gas in either or both of the dehydration and the vitrification processes described above.

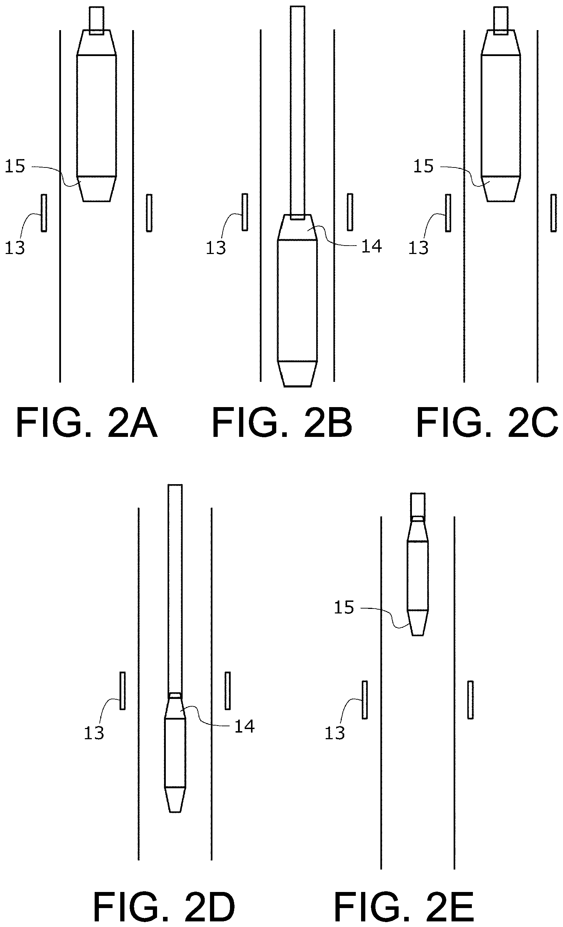

FIGS. 2A to 2E show the procedure of the manufacturing method using the heating apparatus shown in FIG. 1.

### (Preliminary fluorine doping step)

First, the porous glass base material 10 is supported by the suspension rod 8 of the elevating device 7 through the dummy rod 9, and inserted into the furnace core tube 3. As shown in FIG. 2A, the porous glass base material 10 is held for a predetermined time so that the lower end portion 15 is in the position to be heated by the heater 13. The power supplied to the heater 13 is controlled based on the temperature of thermocouples 11 installed on the outer surface of the furnace core tube 3. Specifically, the inside of the furnace core tube 3 is set to a mixed atmosphere of inert gas such as helium and fluorine-based gas. The heater 13 is controlled so that the temperature indicated by the thermocouple 11 is a predetermined temperature within the range of 1000 to 1400°C. The position of the porous glass base material 10 may be fixed during the process, or the porous glass base material 10 may be moved slightly at a low speed.

### (First heat treatment step)

After that, the inside of the furnace core tube 3 is made into a mixed atmosphere of chlorine-based gas, inert gas and fluorine-based gas. The heater 13 is controlled so that the temperature indicated by the thermocouple 11 becomes a predetermined temperature within the range of 1000 to 1400°C. The porous glass base material 10 is gradually lowered through the heating zone to the position shown in FIG. 2B. At this time, the lowering is performed until, for example, the upper end portion 14 of the straight body of the porous glass base material 10 reaches a position below the lowermost portion of the heater 13.

By including the chlorine-based gas in the atmosphere gas in the first heat treatment step, the OH groups in the porous glass base material 10 can be removed. Further, since the atmospheric gas contains fluorine-based gas, the porous glass base material 10 can be doped with fluorine. By setting the temperature in the range of 1000 to 1400°C, it is easy to perform uniform doping in the radial direction because the treatment can be performed while maintaining the porous state of the base material.

### (Second heat treatment step)

Then, the porous glass base material 10 is once pulled up and moved to the position shown in FIG. 2C (i.e., the position where the lower end portion 15 of the porous glass base material 10 is heated by the heater 13), the inside of the furnace core tube 3 is replaced with a helium gas atmosphere, and the process stands by. The heater 13 is controlled so that the temperature indicated by the thermocouple 11 is above 1450°C, and the porous glass base material 10 is gradually lowered. A transparent glass base material is obtained by passing the base material through the heating zone and lowering it to the position shown in FIG. 2D (i.e., the position where the upper end of the straight body portion is below the lowermost portion of the heater 13).

Then, the glass base material 10 is raised to the position shown in FIG. 2E (i.e., the position where the lower end portion 15 of the porous glass base material 10 is below the uppermost end of the heater 13) to finish the process, and the transparent glass base material is taken out from the heating apparatus.

If necessary, a cladding layer is externally attached to the glass base material thus produced. Optical fibers with a diameter of 125 µm are then fabricated by wire drawing from the glass base material.

In the present embodiment, the preliminary fluorine doping step is performed on the end portion where the treatment of the first heat treatment step is started, and then the process continuously shifts to the first heat treatment step. Therefore, in particular, fluctuations in the optical properties of the end portion where the treatment in the first heat treatment step is started can be efficiently suppressed.

### [Second Embodiment]

The second embodiment of the present invention is described below. The second embodiment differs from the first embodiment mainly in that the preliminary fluorine doping step is performed after the first heat treatment step. Hereinafter, the points different from those of the first embodiment will be mainly described, and the points not particularly mentioned will be the same as those of the first embodiment.

### (First heat treatment step)

First, the porous glass base material 10 is supported by the suspension rod 8 of the elevating device 7 through the dummy rod 9, and inserted into the furnace core tube 3. The inside of the furnace core tube 3 is made into a mixed atmosphere of chlorine-based gas, inert gas and fluorine-based gas. The heater 13 is controlled so that the temperature indicated by the thermocouple 11 becomes a predetermined temperature within the range of 1000 to 1400°C. The porous glass base material 10 is gradually lowered from the position shown in FIG. 2A. The porous glass base material 10 is lowered through the heating zone to the position shown in FIG. 2B.

By including the chlorine-based gas in the atmosphere gas in the first heat treatment step, the OH groups in the porous glass base material 10 can be removed. Further, since the atmospheric gas contains fluorine-based gas, the porous glass base material 10 can be doped with fluorine. By setting the temperature in the range of 1000-1400°C, it is easy to perform uniform doping in the radial direction because the treatment can be performed while maintaining the porous state of the base material.

### (First preliminary fluorine doping step)

Then, as shown in FIG. 2B, the upper end portion 14 of the porous glass base material 10 is held for a predetermined time so that the porous glass base material 10 is in the position to be heated by the heater 13. In this state, inert gas or helium and fluorine-based gas are introduced and maintained at a predetermined temperature range of 1000 to 1400°C.

### (Second preliminary fluorine doping step)

Then, as shown in FIG. 2C, the porous glass base material 10 is once pulled up and placed in a position where the lower end portion 15 of the porous glass base material 10 is heated by the heater 13, and the process stands by. In this state, inert gas or helium and fluorine-based gas are introduced and maintained at a predetermined temperature range of 1000 to 1400°C.

It should be noted that only one of the first preliminary fluorine doping step and the second preliminary fluorine doping step may be performed. During the processing of each preliminary fluorine doping step, the position of the porous glass base material 10 may be fixed, or the porous glass base material may be moved slightly at a low speed.

### (Second heat treatment step)

The inside of the furnace core tube 3 is replaced with a helium gas atmosphere, and the heater 13 is controlled so that the temperature indicated by the thermocouple 11 is above 1450°C. The porous glass base material 10 is gradually lowered through the heating zone to the position shown in FIG. 2D. Thereby the transparent base material is obtained.

Then, the glass base material 10 is raised to the position shown in FIG. 2E (i.e., the position where the lower end portion 15 of the porous glass base material 10 is below the uppermost end of the heater 13) to finish the process, and the transparent glass base material is taken out from the heating apparatus.

If necessary, a cladding layer is externally attached to the glass base material thus produced. Optical fibers with a diameter of 125 µm are then fabricated by wire drawing from the glass base material.

In the present embodiment, after the end of the first heat treatment step, the process is continuously shifted to the first preliminary fluorine doping step with respect to the end portion where the treatment of the first heat treatment step is ended. Therefore, in particular, fluctuations in the optical properties of the end portion where the treatment in the first heat treatment step is ended can be efficiently suppressed.

Further, the end portion where the treatment in the first heat treatment step started and the end portion where the treatment in the subsequent second heat treatment step started may be set at the same position. And after performing the second preliminary fluorine doping step on the end portion where the treatment in the second heat treatment step started, the process may be continuously shifted to the second heat treatment step. In this way, optical property fluctuations, especially at the end portion where the treatment in the first heat treatment step started, can also be efficiently suppressed.

### [Third Embodiment]

The third embodiment of the present invention is described below. The third embodiment differs from the first embodiment mainly in that fluorine-based gas is included in the atmosphere gas of the second heat treatment step. Hereinafter, the points different from those of the first embodiment will be mainly described, and the points not particularly mentioned will be the same as those of the first embodiment.

### (Preliminary fluorine doping step)

First, the porous glass base material 10 is supported by the suspension rod 8 of the elevating device 7 through the dummy rod 9, and inserted into the furnace core tube 3. As shown in FIG. 2A, the porous glass base material 10 is held for a predetermined time so that the lower end portion 15 is in the position to be heated by the heater 13. The power supplied to the heater 13 is controlled based on the temperature of thermocouples 11 installed on the outer surface of the furnace core tube 3. Specifically, the inside of the furnace core tube 3 is set to a mixed atmosphere of inert gas such as helium and fluorine-based gas. The heater 13 is controlled so that the temperature indicated by the thermocouple 11 is a predetermined temperature within the range of 1000 to 1400°C. The position of the porous glass base material 10 may be fixed during the process, or the porous glass base material 10 may be moved slightly at a low speed.

### (First heat treatment step)

After that, the inside of the furnace core tube 3 is made into a mixed atmosphere of chlorine-based gas and inert gas. The heater 13 is controlled so that the temperature indicated by the thermocouple 11 becomes a predetermined temperature within the range of 1000 to 1400°C. The porous glass base material 10 is gradually lowered through the heating zone to the position shown in FIG. 2B. At this time, the lowering is performed until, for example, the upper end of the straight body reaches a position below the lowermost portion of the heater.

By including the chlorine-based gas in the atmosphere gas in the first heat treatment step, the OH groups in the porous glass base material 10 can be removed. The atmosphere gas can also contain fluorine gas. In this case, a predetermined amount of fluorine can be doped uniformly in the radial direction of the porous glass base material 10.

### (Second heat treatment step)

Then, the 10 is once pulled up and moved to the position shown in FIG. 2C, the inside of the furnace core tube 3 is replaced with a mixed atmosphere of helium gas and fluorine-based gas, and the process stands by. The heater is controlled so that the temperature indicated by the thermocouple 11 is above 1450°C. The porous glass base material 10 is gradually lowered through the heating zone to the position shown in FIG. 2D. Thereby the transparent glass base material is obtained.

By including fluorine-based gas in the atmosphere gas of the second heat treatment step, it is possible to make transparent glass while doping fluorine into the glass base material 10. The fluorine doping amount distribution in the radial direction can be adjusted by adjusting the temperature, the partial pressure of fluorine-based gas, and the lowering speed of the base material.

Then, the glass base material 10 is raised to the position shown in FIG. 2E to finish the process, and the transparent glass base material is taken out from the heating apparatus.

If necessary, a cladding layer is externally attached to the glass base material thus produced. Optical fibers with a diameter of 125 µm are then fabricated by wire drawing from the glass base material.

### [Fourth Embodiment]

The fourth embodiment of the present invention is described below. The fourth embodiment is similar to the second embodiment in that the preliminary fluorine doping step is performed after the first heat treatment step, but differs from the second embodiment mainly in that the atmosphere gas of the second heat treatment step contains fluorine gas. Hereinafter, the points different from those of the second embodiment will be mainly described, and the points not particularly mentioned will be the same as those of the second embodiment.

### (First heat treatment step)

First, the porous glass base material 10 is supported by the suspension rod 8 of the elevating device 7 through the dummy rod 9, and inserted into the furnace core tube 3. The inside of the furnace core tube 3 is made into a mixed atmosphere of chlorine-based gas and inert gas. The heater 13 is controlled so that the temperature indicated by the thermocouple 11 becomes a predetermined temperature within the range of 1000 to 1400°C. The porous glass base material 10 is gradually lowered from the position shown in FIG.2A through the heating zone to the position shown in FIG. 2B.

By including the chlorine-based gas in the atmosphere gas in the first heat treatment step, the OH groups in the porous glass base material can be removed. The atmosphere gas can also contain fluorine gas. In this case, a predetermined amount of fluorine can be doped uniformly in the radial direction of the porous glass base material 10.

### (First preliminary fluorine doping step)

Then, as shown in FIG. 2B, the upper end portion 14 of the porous glass base material 10 is held for a predetermined time so that the porous glass base material 10 is in the position to be heated by the heater 13. In this state, inert gas or helium and fluorine-based gas are introduced and maintained at a predetermined temperature in the range of 1000 to 1400°C.

### (Second preliminary fluorine doping step)

Then, as shown in FIG. 2C, the porous glass base material is once pulled up and placed in a position where the lower end portion 15 of the porous glass base material 10 is heated by the heater 13, and the process stands by. In this state, inert gas or helium and fluorine-based gas are introduced and maintained at a predetermined temperature in the range of 1000 to 1400°C.

It should be noted that only one of the first preliminary fluorine doping step and the second preliminary fluorine doping step may be performed. During the processing of each preliminary fluorine doping step, the position of the porous glass base material 10 may be fixed, or the porous glass base material may be moved slightly at a low speed.

### (Second heat treatment step)

Then, the 10 is once pulled up and moved to the position shown in FIG. 2C, the inside of the furnace core tube 3 is replaced with a mixed atmosphere of helium gas and fluorine-based gas, and the process stands by. The heater 13 is controlled so that the temperature indicated by the thermocouple 11 is above 1450°C. The porous glass base material 10 is gradually lowered through the heating zone to the position shown in FIG. 2D. Thereby the transparent glass base material is obtained.

By including fluorine-based gas in the atmosphere gas of the second heat treatment step, it is possible to make transparent glass while doping fluorine into the glass base material 10. Further, the fluorine doping amount distribution in the radial direction can be adjusted by adjusting the temperature, the partial pressure of fluorine-based gas, and the lowering speed of the base material.

Then, the glass base material 10 is raised to the position shown in FIG. 2E to finish the process, and the transparent glass base material is taken out from the heating apparatus.

If necessary, a cladding layer is externally attached to the glass base material thus produced. Optical fibers with a diameter of 125 µm are then fabricated by wire drawing from the glass base material.

In the manufacturing method according to each embodiment described above, by adjusting the temperature indicated by the thermocouple 11, the holding time at each position, the flow rate of fluorine-based gas, the position of the upper end 14 or lower end 15 of the glass base material 10 relative to the heater 13, etc., in the preliminary fluorine doping step, it is possible to achieve uniformity of the optical properties in the longitudinal direction of the optical fiber obtained by drawing from the glass base material 10.

Further, by setting the length of the heater 13 of the heating apparatus to one-fourth or less of the length of the porous glass base material 10 to be treated, a steep temperature distribution can be formed with respect to the porous glass base material 10. Thereby, it possible to adjust subtle optical property variations by the preliminary fluorine doping step.

As the fluorine-based gas used for the atmosphere of the fluorine doping process, SiF₄, CF₄, SF₆, or C₂F₆ is preferred because it is easier to adjust the fluorine doping distribution in the radial direction.

Further, it is preferable to use either SiCl₄ or Cl₂ as the chlorine-based gas used in the atmosphere of the first heat treatment step. As a result, not only the OH groups can be effectively removed, but also the silica glass constituting the base material is less likely to be mixed with unintended metal impurities.

### EXAMPLES

### (Example 1)

A porous glass base material with a total length of 2000 mm was produced by the VAD method and inserted into a heating apparatus with a heater length of 300 mm for heat treatment.

First, with the porous glass base material 10 standing by in the position shown in FIG. 2A, the temperature was raised so that the temperature indicated by the thermocouple 11 was 1300°C while the mixed gas flowed into the furnace core tube 3 at a flow rate of Cl₂:0.7 L/min and Ar:30 L/min. With the atmosphere gas and temperature controlled and maintained, the porous glass base material 10 was moved from the top to the bottom at a speed of 10 mm/min to the position shown in FIG. 2B (first heat treatment step).

Next, He gas was introduced into the furnace core tube 3 at a flow rate of 20 L/min, and the porous glass base material 10 was moved from the position shown in FIG. 2B to the position shown in FIG. 2C.

With the porous glass base material 10 maintained in this position, He gas was introduced into the furnace core tube 3 at a flow rate of 20 L / min, and SiF₄ gas was introduced at a flow rate of 1 L / min. The temperature was held at 1300°C. This state was held for 30 minutes (preliminary fluorine doping step).

Then, He gas was introduced into the furnace core tube 3 at a flow rate of 20 L/min, and SiF₄ gas was introduced at a flow rate of 0.25 L/min, and the temperature was raised and held so that the temperature indicated by the thermocouple 11 was 1500°C. The porous glass base material was moved downward at a speed of 5 mm/min from the position shown in FIG. 2C to the position shown in FIG. 2D. Thereby the transparent vitrification was performed (second heat treatment step).

The transparent glass base material was then raised to the position shown in FIG. 2E and taken out from the heating apparatus.

After the cladding layer was uniformly externally attached onto the produced transparent glass base material by the OVD method, the base material was drawn into an optical fiber, and the optical characteristics of the optical fiber were measured.

### (Comparative Example 1)

A porous glass base material was produced in the same way as in Example 1 and inserted into a heating apparatus for heat treatment. After the first heat treatment process was applied in the same manner as in Example 1, He gas was introduced into the furnace core tube 3 at a flow rate of 20 L/min, and the porous glass base material 10 was moved from the position shown in FIG. 2B to the position shown in FIG. 2C. Then, the transparent vitrification of the base material was performed by applying the second heat treatment step in the same manner as in Example 1, without the preliminary fluorine doping step. After the cladding layer was uniformly externally attached by the OVD method onto the transparent glass base material taken out from the heating apparatus, the base material was drawn into an optical fiber, and the optical characteristics of the optical fiber were measured.

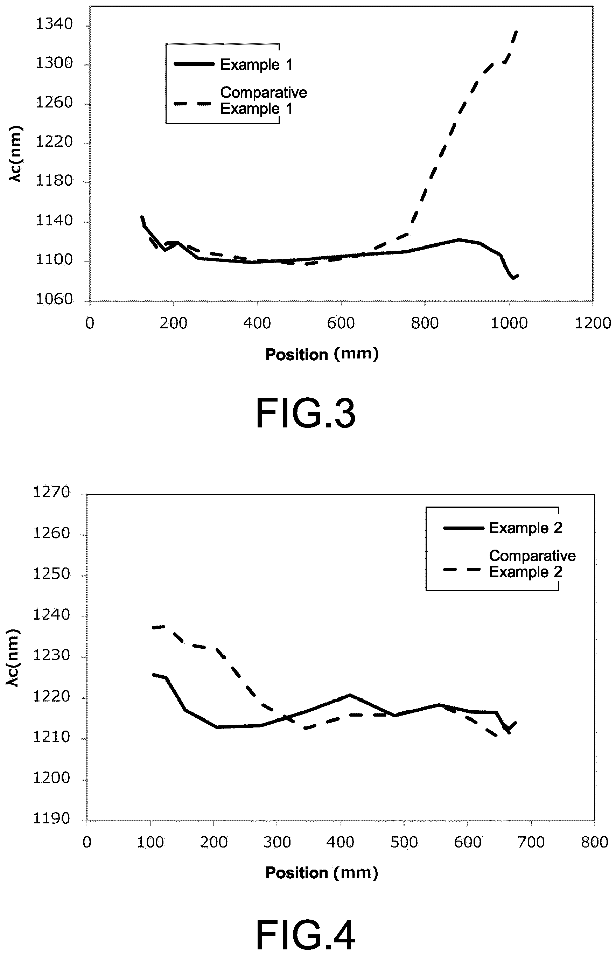

FIG. 3 shows the longitudinal distribution of cutoff wavelengths of optical fibers obtained by Example 1 and Comparative Example 1, respectively. The horizontal axis corresponds to the longitudinal position from the upper end to the lower end of the transparent glass base material taken out of the heating apparatus. The porous glass base material with a length of 2,000 mm shrank in the process of the transparent vitrification through the second heat treatment step, reducing its length by about half.

It can be seen that by providing the preliminary fluorine doping step, the cutoff wavelength fluctuation at the lower end of the glass base material could be suppressed in Example 1 as compared with Comparative Example 1.

### (Example 2)

A porous glass base material with a total length of 2000 mm was produced by the VAD method and inserted into a heating apparatus with a heater length of 300 mm for heat treatment.

First, with the porous glass base material 10 standing by in the position shown in FIG. 2A, the temperature was raised so that the temperature indicated by the thermocouple 11 was 1300°C while the mixed gas flowed into the furnace core tube 3 at a flow rate of Cl₂:0.7 L/min, Ar:30 L/min, and SiF₄: 0.1 L/min. With the atmosphere gas and temperature controlled and maintained, the porous glass base material 10 was moved from the top to the bottom at a speed of 10 mm/min to the position shown in FIG. 2B (first heat treatment step).

At this position, He gas was introduced into the furnace core tube 3 at a flow rate of 20 L / min, and SiF₄ gas was introduced at a flow rate of 0.1 L/min. The temperature was held at 1300°C. This state was held for 15 minutes (preliminary fluorine doping step).

Next, He gas was introduced into the furnace core tube 3 at a flow rate of 20 L/min, and the porous glass base material 10 was moved from the position shown in FIG. 2B to the position shown in FIG. 2C.

Then, He gas was introduced into the furnace core tube at a flow rate of 20 L/min, and SiF₄ gas was introduced at a flow rate of 0.25 L/min, and the temperature was raised and held so that the temperature indicated by the thermocouple 11 was 1550°C. The porous glass base material 10 was moved downward at a speed of 5 mm/min from the position shown in FIG. 2C to the position shown in FIG. 2D. Thereby the transparent vitrification was performed (second heat treatment step).

The transparent glass base material was then raised to the position shown in FIG. 2E and taken out from the heating apparatus.

After the cladding layer was uniformly externally attached onto the produced transparent glass base material by the OVD method, the base material was drawn into an optical fiber, and the optical characteristics of the optical fiber were measured.

### (Comparative Example 2)

A porous glass base material was produced in the same way as in Example 2 and inserted into a heating apparatus for heat treatment. After the first heat treatment process was applied in the same manner as in Example 2, He gas was introduced into the furnace core tube 3 at a flow rate of 20 L/min without the preliminary fluorine doping step. The porous glass base material 10 was moved from the position shown in FIG. 2B to the position shown in FIG. 2C.

Then, the transparent vitrification of the base material was performed by applying the second heat treatment step in the same manner as in Example 2. After the cladding layer was uniformly externally attached by the OVD method onto the transparent glass base material taken out from the heating apparatus, the base material was drawn into an optical fiber, and the optical characteristics of the optical fiber were measured.

FIG. 4 shows the longitudinal distribution of cutoff wavelengths of optical fibers obtained by Example 2 and Comparative Example 2, respectively. The horizontal axis corresponds to the longitudinal position from the upper end to the lower end of the transparent glass base material taken out of the heating apparatus. The porous glass base material with a length of 2,000 mm shrank in the process of the transparent vitrification through the second heat treatment step, reducing its length by about half.

By providing the preliminary fluorine doping step, the cutoff wavelength fluctuation at the upper end of the glass base material could be suppressed in Example 2 compared with Comparative Example 2.

As explained above, from the glass base material for the optical fiber obtained by the manufacturing method of glass base material for optical fiber according to the present invention, an optical fiber with suppressed longitudinal variation in optical properties can be obtained.

## Claims

1. A manufacturing method of glass base material for optical fiber, comprising:
a first heat treatment step in which the porous glass base material inserted in a vessel of a sintering furnace is heated by a heater installed around the periphery of the vessel while being raised or lowered in the longitudinal direction in a chlorine-based gas containing atmosphere in the vessel of the sintering furnace;
a second heat treatment step in which the porous glass base material is heated by the heater to obtain a transparent glass body while being raised or lowered in the longitudinal direction in an inert gas containing atmosphere in the vessel after the first heat treatment step; and
a preliminary fluorine doping step prior to the second heat treatment step in which one or both ends of the porous glass base material are heated by the heater in a fluorine-based gas containing atmosphere in the vessel.

2. The manufacturing method as claimed in claim 1, wherein the preliminary fluorine doping step is performed prior to the first heat treatment step.

3. The manufacturing method as claimed in claim 1 or 2, wherein the preliminary fluorine doping step is performed after the completion of the first heat treatment step.

4. The manufacturing method as claimed in any one of claims 1 to 3, wherein in the first heat treatment step, the inside of the vessel has a mixed atmosphere of chlorine-based gas and fluorine-based gas.

5. The manufacturing method as claimed in any one of claims 1 to 4, wherein in the second heat treatment step, the inside of the vessel has a mixed atmosphere of inert gas and fluorine-based gas.

6. The manufacturing method as claimed in any one of claims 1 to 5, wherein the preliminary fluorine doping step is performed with the porous glass base material in a fixed position or with slight movement.

7. The manufacturing method as claimed in any one of claims 1 to 6, wherein the preliminary fluorine doping step is performed at a temperature between 1000°C and 1400°C.

8. The manufacturing method as claimed in any one of claims 1 to 7, wherein the length of the heater is one-fourth or less of the length of the porous glass base material.

9. The manufacturing method as claimed in any one of claims 1 to 8, wherein the fluorine-based gas introduced into the vessel is any of SiF₄, CF₄, SF₆, and C₂F₆.

10. The manufacturing method as claimed in any one of claims 1 to 9, wherein the chlorine-based gas introduced into the vessel is SiCl₄ or Cl₂.

## Patentansprüche

1. Verfahren zum Herstellen eines Glasbasismaterials für optische Fasern, mit:
einem ersten Wärmebehandlungsschritt, in dem das in ein Gefäß eines Sinterofens eingebrachte poröse Glasbasismaterial durch eine um den Umfang des Gefäßes herum installierte Heizeinrichtung erwärmt wird, während es in dem Gefäß des Sinterofens in der Längsrichtung in einer ein Gas auf Chlorbasis enthaltenden Gasatmosphäre angehoben oder abgesenkt wird;
einem nach dem ersten Wärmebehandlungsschritt ausgeführten zweiten Wärmebehandlungsschritt, in dem das poröse Glasbasismaterial durch die Heizeinrichtung erwärmt wird, um einen transparenten Glaskörper zu erhalten, während es in der Längsrichtung in einer ein Inertgas enthaltenden Atmosphäre in dem Gefäß angehoben oder abgesenkt wird; und
einem vorbereitenden Fluordotierungsschritt vor dem zweiten Wärmebehandlungsschritt, in dem ein oder beide Enden des porösen Glasbasismaterials durch die Heizeinrichtung in einer ein Gas auf Fluorbasis enthaltenden Atmosphäre in dem Gefäß erwärmt wird/werden.

2. Verfahren nach Anspruch 1, wobei der vorbereitende Fluordotierungsschritt vor dem ersten Wärmebehandlungsschritt ausgeführt wird.

3. Verfahren nach Anspruch 1 oder 2, wobei der vorbereitende Fluordotierungsschritt nach Abschluss des ersten Wärmebehandlungsschritts ausgeführt wird.

4. Verfahren nach einem der Ansprüche 1 bis 3, wobei im ersten Wärmebehandlungsschritt im Inneren des Gefäßes eine Mischatmosphäre aus einem Gas auf Chlorbasis und einem Gas auf Fluorbasis vorliegt.

5. Verfahren nach einem der Ansprüche 1 bis 4, wobei im zweiten Wärmebehandlungsschritt im Inneren des Gefäßes eine Mischatmosphäre aus einem Inertgas und einem Gas auf Fluorbasis vorliegt.

6. Verfahren nach einem der Ansprüche 1 bis 5, wobei der vorbereitende Fluordotierungsschritt mit dem porösen Glasbasismaterial in einer festen Position oder mit einer leichten Bewegung ausgeführt wird.

7. Verfahren nach einem der Ansprüche 1 bis 6, wobei der vorbereitende Fluordotierungsschritt bei einer Temperatur zwischen 1000°C und 1400°C ausgeführt wird.

8. Verfahren nach einem der Ansprüche 1 bis 7, wobei die Länge der Heizeinrichtung ein Viertel oder weniger der Länge des porösen Glasbasismaterials beträgt.

9. Verfahren nach einem der Ansprüche 1 bis 8, wobei das in den Behälter eingeleitete Gas auf Fluorbasis eines der Gase SiF₄, CF₄, SF₆ und C₂F₆ ist.

10. Verfahren nach einem der Ansprüche 1 bis 9, wobei das in das Gefäß eingeleitete Gas auf Chlorbasis SiCl₄ oder Cl₂ ist.

## Revendications

1. Procédé de fabrication d'un matériau de base en verre pour fibre optique, comprenant :
une première étape de traitement thermique dans laquelle le matériau de base en verre poreux inséré dans une cuve d'un four de frittage est chauffé par un dispositif de chauffage installé autour de la périphérie de la cuve tout en étant élevé ou abaissé dans la direction longitudinale dans une atmosphère contenant du gaz à base de chlore dans la cuve du four de frittage ;
une seconde étape de traitement thermique dans laquelle le matériau de base en verre poreux est chauffé par le dispositif de chauffage pour obtenir un corps en verre transparent tout en étant élevé ou abaissé dans la direction longitudinale dans une atmosphère contenant un gaz inerte dans la cuve après la première étape de traitement thermique ; et
une étape de dopage au fluor préliminaire avant la seconde étape de traitement thermique dans laquelle une ou les deux extrémités du matériau de base en verre poreux sont chauffées par le dispositif de chauffage dans une atmosphère contenant du gaz à base de fluor dans la cuve.

2. Procédé de fabrication selon la revendication 1, dans lequel l'étape de dopage au fluor préliminaire est réalisée avant la première étape de traitement thermique.

3. Procédé de fabrication selon la revendication 1 ou 2, dans lequel l'étape de dopage au fluor préliminaire est réalisée après l'achèvement de la première étape de traitement thermique.

4. Procédé de fabrication selon l'une quelconque des revendications 1 à 3, dans lequel dans la première étape de traitement thermique, l'intérieur de la cuve présente une atmosphère mixte de gaz à base de chlore et gaz à base de fluor.

5. Procédé de fabrication selon l'une quelconque des revendications 1 à 4, dans lequel dans la seconde étape de traitement thermique, l'intérieur de la cuve présente une atmosphère mixte de gaz inerte et gaz à base de fluor.

6. Procédé de fabrication selon l'une quelconque des revendications 1 à 5, dans lequel l'étape de dopage au fluor préliminaire est réalisée avec le matériau de base en verre poreux dans une position fixe ou avec un mouvement léger.

7. Procédé de fabrication selon l'une quelconque des revendications 1 à 6, dans lequel l'étape de dopage au fluor préliminaire est réalisée à une température de 1 000°C à 1 400°C.

8. Procédé de fabrication selon l'une quelconque des revendications 1 à 7, dans lequel la longueur du dispositif de chauffage est d'un quart ou moins de la longueur du matériau de base en verre poreux.

9. Procédé de fabrication selon l'une quelconque des revendications 1 à 8, dans lequel le gaz à base de fluor introduit dans la cuve est l'un quelconque de SiF₄, CF₄, SF₆, et C₂F₆.

10. Procédé de fabrication selon l'une quelconque des revendications 1 à 9, dans lequel le gaz à base de chlore introduit dans la cuve est SiCl₄ ou Cl₂.
